# EUROPÄISCHE PATENTSCHRIFT

(11) **EP 1 825 620 B1**
(45) Veröffentlichungstag und Bekanntmachung des Hinweises auf die Patenterteilung: **08.04.2009**
(21) Anmeldenummer: 05815550.8
(22) Anmeldetag: 24.11.2005
(51) Int. Cl.: H04J 3/06

(54) **SYNCHRONISATIONSMODUL**
SYNCHRONIZATION MODULE
MODULE DE SYNCHRONISATION

(30) Priorität: 16.12.2004 DE 102004061127
(43) Veröffentlichungstag der Anmeldung: 29.08.2007
(73) Patentinhaber: SIEMENS AKTIENGESELLSCHAFT, 80333 München (DE)
(72) Erfinder: ERICH, Armin, 82229 Seefeld (DE); SCHÜLER, Stephan, 58454 Witten (DE)
(86) Internationale Anmeldenummer: PCT/EP2005/056193
(87) Internationale Veröffentlichungsnummer: WO 2006/063922

(56) Entgegenhaltungen:
- IEC 61588: "IEEE 1588: precision clock synchronization protocol for networked measurement and control systems" September 2004 (2004-09), IEEE , INTERNATIONAL STANDARD, ISBN 2-8318-7541-2 , XP002367391 in der Anmeldung erwähnt Kapitel 6.2.4, Seiten 24-30 Kapitel A.5.2.1, Seite 125
- GRAMANN T ET AL: "PRECISION TIME PROTOCOL IEEE 1588 IN DER PRAXIS ZEITSYNCHRONISATION IM SUBMIKROSEKUNDENBEREICH" ELEKTRONIK, WEKA FACHZEITSCHRIFTENVERLAG, POING, DE, Bd. 52, Nr. 24, 25. November 2003 (2003-11-25), Seiten 86-93, XP001177441 ISSN: 0013-5658
- BUTNER S E ET AL: "Nanosecond-scale even synchronization over local-area networks" LOCAL COMPUTER NETWORKS, 2002. PROCEEDINGS. LCN 2002. 27TH ANNUAL IEEE CONFERENCE ON 6-8 NOV.2002, PISCATAWAY, NJ, USA,IEEE, 6. November 2002 (2002-11-06), Seiten 261-269, XP010628175 ISBN: 0-7695-1591-6
- KANNISTO J ET AL: "Precision Time Protocol Prototype on Wireless LAN" TELECOMMUNICATIONS AND NETWORKING - ICT 2004. 11TH INTERNATIONAL CONFERENCE ON TELECOMMUNICATIONS. PROCEEDINGS 1-6 AUG. 2004 FORTALEZA, BRAZIL, August 2004 (2004-08), Seiten 1236-1245, XP019009251 Telecommunications and Networking - ICT 2004. 11th International Conference on Telecommunications. Proceedings (Lecture Notes in Comput. Sci. Vol.3124) Springer-Verlag Berlin, Germany ISBN: 3-540-22571-4

## Beschreibung

In verteilten Kommunikations- oder Datenverarbeitungssystemen werden hohe Anforderungen an die Zeitsynchronität von dessen Komponenten gestellt. Die Zeittaktgeber dieser Komponenten werden häufig durch Austausch von mit Zeitstempeln versehenen Datenpaketen über ein asynchrones Netzwerk miteinander, oder mit einem über das asynchrone Netzwerk erreichbaren Referenzzeitgeber synchronisiert.

Als Protokoll zur Takt- und Phasensynchronisation von Zeittaktgebern über asynchrone Netzwerke wird gegenwärtig das so genannte PTP-Protokoll (PTP: Precision Time Protocol) favorisiert, das im Standard IEEE 1588 (IEEE: Institute of Electrical and Electronical Engineers) definiert ist. Der genannte Standard ermöglicht grundsätzlich eine sehr hohe Synchronisationsgenauigkeit. Die Hardwareanforderungen zur Erreichung dieser Synchronisationsgenauigkeit sind jedoch im Standarddokument "IEEE Std 1588^{™} -2002, IEEE Standard for a Precision Clock Synchronization Protocol for Networked Measurement and Control Systems", datiert vom 8.11.2002, nicht genau spezifiziert.

Die folgenden Bezugnahmen auf diesen Standard beziehen sich auf die vorstehend genannte Fassung.

Eine jüngere Fassung dieses Standards ist im Dokument IEC 61588, "IEEE 1588^{™}: Precision clock synchronization protocol for networked measurement and control systems", XP002367391, datiert vom September 2004, wiedergegeben.

Darüber hinaus wird der IEEE-1588-Standard auch in dem Artikel "Precision Time Protocol IEEE 1588 in der Praxis" von T. Gramann und D. S. Mohl in Bd. 52, Nr. 24, Seiten 86-93 der Zeitschrift "Elektronik" des Weka Fachzeitschriftenverlags, Poing, vom November 2003 beschrieben.

Eine Verwendung des IEEE-1588-Standards zur Synchronisation drahtloser Netzwerke ist weiterhin aus dem Artikel "Precision Time Protocol Prototype on Wirless LAN" von J. Kannisto et al. in Telecommunications and Networking - ICT 2004, 11th International Conference on Telecommunications, Proceedings 1-6 August 2004, Fortaleza, Brazil, Seiten 1236-1245 bekannt.

Die Hardwareanforderungen zur Erreichung einer höheren Synchronisationsgenauigkeit werden jedoch auch in den vorstehend genannten Dokumenten nicht näher spezifiziert

Aus dem Dokument "Nanosecond-scale Event Synchronization over Local-area Networks" von S.E. Butner und S. Vahey in Local Computer Networks, Proceedings, LCN 2002, 27th annual IEEE conference, 6.-8. November 2002, Piscataway, NJ, USA, Seiten 261-269 ist bekannt, die Genauigkeit des sog. Network-Time-Protocol (NTP) durch Hardware-Mittel zu erhöhen. Die Anwendbarkeit oder Eignung dieser Hardware-Mittel für Synchronisationsumgebungen gemäß dem IEEE-1588-Standard ist jedoch nicht spezifiziert.

Die erreichbare Synchronisationsgenauigkeit wird bisher insbesondere dadurch begrenzt, dass beim Setzen und Lesen der Zeitstempel durch einen softwareimplementierten IEEE 1588-Protokollstack ein sog. Software-Jitter auftritt. Dieser ist im Wesentlichen durch die unstetige Verarbeitungsabfolge der zuständigen Protokollroutinen bedingt, die vom Betriebssystem in der Regel durch eine Vielzahl sog. Interrupts unterbrochen werden. Dieser Software-Jitter wird im Rahmen des Standards IEEE 1588 auch als "Protocol Stack Delay Fluctuation", d.h. Protokollstack-Verzögerungsfluktuation bezeichnet. In der Praxis hat sich gezeigt, dass auf diese Weise nur eine Synchronisationsgenauigkeit in der Größenordnung von 1µs bis 100µs erreichbar ist.

Mittels einer Hardwareimplementierung des PTP-Protokolls sind zwar grundsätzlich höhere Synchronisationsgenauigkeiten zu erzielen, doch eine derartige Hardwareimplementierung bedingt auch einen um ein Vielfaches höheren Aufwand.

Es ist Aufgabe der vorliegenden Erfindung ein Synchronisiermodul mit einer Implementierung des PTP-Protokolls gemäß IEEE-1588-Standard anzugeben, durch das sich mit verhältnismäßig geringem Aufwand höhere Synchronisationsgenauigkeiten erzielen lassen.

Gelöst wird diese Aufgabe durch ein Synchronisiermodul mit den Merkmalen des Patentanspruchs 1.

Vorteilhafte Ausführungsformen und Weiterbildungen der Erfindung sind in den abhängigen Ansprüchen angegeben.

Ein Ausführungsbeispiel der Erfindung wird nachfolgend anhand der Zeichnung näher erläutert. Dabei zeigen jeweils in schematischer Darstellung:
Figur 1 ein Diagramm zur Veranschaulichung verschiedener Zeitstempelpunkte und deren Latenzzeiten, und
Figur 2 ein erfindungsgemäßes Synchronisiermodul.

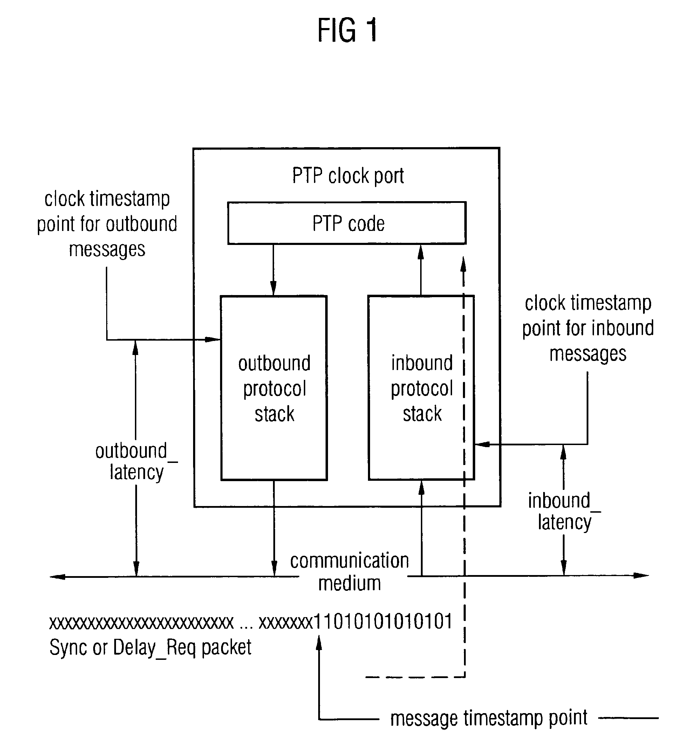

Figur 1 zeigt ein Diagramm aus Kapitel 6.2.4 des bekannten IEEE 1588^{™}-2002-Standarddokuments zur Veranschaulichung verschiedener Zeitstempelpunkte und deren Latenzzeiten. Ein dort veranschaulichter Meldungs-Zeitstempelpunkt (message timestamp point) ist ein Erkennungsmerkmal von Synchronisiermeldungen wie den in Figur 1 dargestellten Sync- und Delay_Req-Meldungen des PTP-Protokolls. Der Meldungs-Zeitstempelpunkt kann erkannt werden, wenn die betreffende Meldung den Clock-Zeitstempelpunkt (clock timestamp point) gemäß PTP-Protokoll passiert. Figur 1 zeigt eine typische Sync- oder Delay_Req-Meldung, die entlang des strichlierten Pfeils den PTP-Protokollstack für eintreffende Datenpakete durchläuft. Der Meldungs-Zeitstempelpunkt, der in Figur 1 durch das erste "11"-Bitmuster der Meldung nach einer Reihe führender "10"-Bitmuster repräsentiert wird, passiert den Clock-Zeitstempelpunkt nach einer Zeitspanne inbound_latency nach Verlassen des physikalischen Übertragungsmediums. Die vorstehenden Ausführungen sind sinngemäß auch auf die Zeitstempel und Latenzzeiten ausgehender Synchronisiermeldungen übertragbar.

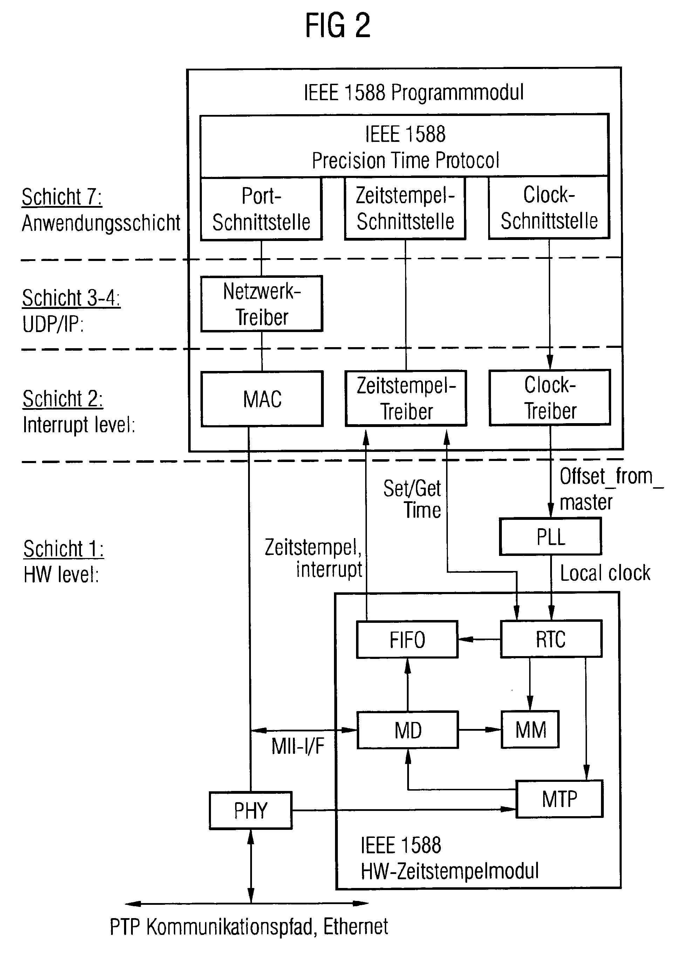

Figur 2 zeigt ein erfindungsgemäßes Synchronisiermodul in schematischer Darstellung. Erfindungsgemäß ist bei diesem Synchronisiermodul ein zeitkritischer Anteil des IEEE 1588-Standards, nämlich die Zeitstempelfunktion, mittels eines spezifischen Hardware-Zeitstempelmoduls implementiert und nicht durch Software. Das Hardware-Zeitstempelmodul ist als eigenständige Komponente implementiert und weist definierte Schnittstellen auf. Die auf den Schichten 2-7 des OSI-Referenzmodells angesiedelte Funktionalität des IEEE 1588-Standards wird dagegen durch ein standardkonformes Programmmodul implementiert, das insbesondere zu sendende Synchronisiermeldungen generiert und diese mit später durch das Hardware-Zeitstempelmodul zu überschreibenden Zeitstempeln versieht.

Das Hardware-Zeitstempelmodul verfügt über folgende Funktionsblöcke:

### Echtzeituhr RTC:

Ein 32-bit Zähler mit den Zählvariablen "seconds" und "nanoseconds" entsprechend den Feldern originTimestamp des PTP-Protokolls, und damit vom Typ TimeRepresentation des PTP-Protokolls.

### Meldungsdetektor MD (für zu sendende und zu empfangende Synchronisiermeldungen):

Der Meldungsdetektor MD dient zur Erkennung der Synchronisiermeldungs-Kennungen PTP_SYNC_MESSAGE und PTP_DELAY_REQ_MESSAGE des PTP-Protokolls und kann bestimmte Felder von erkannten Synchronisiermeldungen im Zwischenspeicher FIFO speichern.

Die Erkennung der Meldungskennungen PTP_SYNC_MESSAGE und PTP_DELAY_REQ_MESSAGE läuft folgendermaßen ab:
1. Erkennung und Berücksichtigung sog. tags bei Tagged Frames
2. Erkennung von PTP_SYNC_MESSAGE und PTP_DELAY_REQ_MESSAGE durch Bitmustervergleich des seriellen Bitstroms mit bestimmten Feldern von Ethernet-Frames (z.B. UDP-Port 319 als sog. Event-Port für PTP-Meldungen und dem Feld "control")
3. Lesen der PTP-Felder: "control" und "sequenceId"
4. Speichern dieser Felder im Zwischenspeicher FIFO.
5. Speichern des RTC-Zeitstempels, der zum Zeitpunkt "message timestamp point" festgehalten wurde.

### Zwischenspeicher FIFO (FirstInFirstOut-Speicher):

### Beispiel für dessen Inhalte:

| **Control** | **SequenceId** | **Timestamp from RTC** |
|---|---|---|
| **(8 bit)** | **(16 bit)** | **(2 * 32 bit)** |
| 0 (PTP_SYNC_MESSAGE) | 100 | 0x12345678, |
| | | 0x12345678 |
| 1 (PTP_DELAY_REQ_MESSAGE) | 101 | 0x12345678, |
| | | 0x12346678 |
| | | |
| | | |

### Meldungsmanipulator MM:

Der Meldungsmanipulator MM kann Werte von bestimmten Feldern der vom Meldungsdetektor MD erkannten Synchronisiermeldungen verändern.

Bei zu sendenden Synchronisiermeldungen kann der Meldungsmanipulator MM die Zeitstempelfelder OriginTimestamp der Synchronisiermeldungen jeweils mit demjenigen aktuellen Zeitwert der Echtzeituhr RTC überschreiben, der zum Zeitpunkt "message timestamp point" gemäß Figur 1 gültig war. Danach führt der Meldungsmanipulator MM eine Berechnung der Felder "UDP checksum" und des Ethernet-CRC-Feldes durch und überschreibt auch diese Felder der jeweiligen Synchronisiermeldung. Das Überschreiben des Zeitstempelfeldes und der Prüfsummefelder erfolgt "on the fly", also mit einer sehr geringen zusätzlichen Verzögerung. Dagegen würden bei einer Implementierung der Zeitstempelfunktion durch Software sowohl eine erhebliche Verzögerung als auch ein unregelmäßiger, und damit kaum kompensierbarer Jitter auftreten.

Für zu empfangenden Synchronisiermeldungen kann der Standard IEEE 1588-2002 optional dahingehend erweitert werden, dass für die Meldungen SyncMessage und DelayRequestMessage zusätzliche Felder "ReceiveTimestamp" vorgesehen werden. Ein sog. "Extension Mechanism" zur Erweiterung um neue Felder bzw. Meldungen ist gegenwärtig geplant. Das zusätzlich vorgesehene Feld ReceiveTimestamp kann durch den Meldungsmanipulator MM bei empfangenen Synchronisiermeldungen mit demjenigen aktuellen Zeitwert der Echtzeituhr RTC beschrieben werden, der zum Zeitpunkt "message timestamp point" gemäß Figur 1 gültig war. Danach führt der Meldungsmanipulator MM eine Berechnung der Felder "UDP checksum" und des Ethernet CRC-Feldes durch und überschreibt auch diese Felder der empfangenen Synchronisiermeldung. Dies erfolgt "on the fly", also mit einer sehr geringen zusätzlichen Verzögerung.

Die sehr geringen Zeitverzögerungen und deren weitgehende Konstanz werden beim erfindungsgemäßen Synchronisiermodul insbesondere durch den direkten (Hardware-)Zugriff des Meldungsdetektors MD und des Meldungsmanipulators MM auf die Echtzeituhr RTC ermöglicht.

### Meldungs-Zeitstempelpunkt-Speicher MTP (Message Timestamp point store):

Der Meldungs-Zeitstempelpunkt-Speicher MTP speichert einen Zeitstempel zu dem Zeitpunkt, an dem der Schnittstellenbaustein PHY der physikalischen Schnittstelle die Präambel einer Synchronisiermeldung erkannt hat. Um das Speichern des Zeitstempels auszulösen, sendet der Schnittstellenbaustein PHY ein Signal an den Meldungs-Zeitstempelpunkt-Speicher MTP bzw. das Hardware-Zeitstempelmodul. Sobald der Meldungsdetektor MD die Synchronisiermeldung ebenfalls erkannt hat, kann er den Zeitpunkt, an dem dieses Signal gesendet wurde und der im Meldungs-Zeitstempelpunkt-Speicher MTP gespeichert wurde, als genauen Zeitstempel verwenden.

Durch diese Anordnung kann ein Jitter, der ansonsten durch den Schnittstellenbaustein PHY verursacht würde, weitgehend vermieden werden.

### PLL-Schaltung PLL (PLL: Phase Locked Loop):

Die Echtzeituhr RTC wird vom Taktsignal "local clock" getaktet. Dieser kann von einer externen PLL-Schaltung PLL zugeführt werden. Optional kann die PLL-Schaltung PLL auch als Funktionsblock integriert sein.

Die Grobeinstellung der Echtzeituhr RTC erfolgt durch direktes Setzen eines Initialwertes aus dem PTP-Protokoll-Stack. Die Feineinstellung der Echtzeituhr RTC erfolgt durch Regelung der PLL-Schaltung PLL.

Mit einer durch das erfindungsgemäße Synchronisiermodul zu sendenden PTP-Synchronisiermeldung wird im Synchronisiermodul wie folgt verfahren:
Die zu sendende Synchronisiermeldung wird durch das IEEE 1588-Programmmodul im PTP-Protokollstack generiert und über die Schichten Schicht 4 und 3 (UDP/IP) zur MAC-Schicht (MAC: Media Access Control) durchgegeben. Die Zeitstempel-Felder werden wie im bisherigen IEEE 1588-2002-Standard vorgesehen durch das IEEE 1588-Programmmodul eingetragen. Bei der Weitergabe der Synchronisiermeldung von der MAC-Schicht zum Schnittstellenbaustein PHY über ein MII-Interface (MII: Media Independent Interface) wird die Synchronisiermeldung durch das Hardware-Zeitstempelmodul dekodiert. Wird hierbei durch den Meldungsdetektor MD eine Sync- oder DelayRequest-Meldung erkannt, so werden vom Meldungsmanipulator MM die Zeitstempel-Felder, die durch das IEEE 1588-Programmmodul gesetzt wurden, durch den aktuellen hochgenauen Zeitwert der Echtzeituhr RTC ersetzt. Zusätzlich wird ein Update der Prüfsumme "UDP checksum" und des Ethernet CRC-Feldes durchgeführt.

Durch das Hardware-Zeitstempelmodul wird der in Figur 1 dargestellte Clock-Zeitstempelpunkt direkt am Meldungs-Zeitstempelpunkt generiert. Dadurch können die Verzögerungszeiten inbound_latency und outbound_latency sowie die Protokollstack-Verzögerungsfluktuation auf einen sehr kleinen Wert reduziert werden.

Die Takt- und Phasen-Genauigkeit des Taktsignals "local clock" wird sowohl für sog. "ordinary clocks" als auch für sog. "boundary clocks" hinsichtlich Jitter und max. Zeitablage zur Referenzzeitquelle (clock master) wesentlich verbessert.

Typische Werte für die Protokollstack-Verzögerungsfluktuation in Abhängigkeit von der Implementierung des Clock-Zeitstempelpunkts sind nachfolgend aufgelistet:

| **Clock-Zeitstempelpunkt:** | **Protokollstack-Verzögerungsfluktuation** |
|---|---|
| SW-Zeitstempel auf Schicht 7 | 100µs .. 10ms |
| SW-Zeitstempel auf Schicht 2 | 1µs .. 100µs |
| Hardware-Zeitstempel gemäß Erfindung | Größenordnung von ns |

Durch die erzielbaren Synchronisationsgenauigkeiten bis in den Nanosekundenbereich erschließt sich eine Vielzahl neuer Anwendungsfelder für den IEEE1588-Standard.

Ein weiterer Vorteil der Erfindung ist darin zu sehen, dass die Protokollstack-Verzögerungsfluktuationen weitgehend unabhängig von Einflüssen der Software werden. Derartige Software-Einflüsse entstehen z.B. durch eine hohe oder schwankende Prozessorauslastung, Interruptsperrzeiten, hohe oder schwankende Interrupthäufigkeit, wechselnde Prozessorleistung und/oder die Architektur des Interruptcontrollers.

Besonders vorteilhaft ist auch, dass die Protokollstack-Verzögerungsfluktuationen weitgehend unabhängig von der Hardware-Plattform werden, auf der das PTP-Protokoll abläuft (Prozessor, Hardware-Architektur). Im Gegensatz dazu ändert sich die Protokollstack-Verzögerungsfluktuation bei einer Portierung eines Synchronisiermoduls gemäß IEEE 1588-2002, bei dem das Zeitstempelmodul durch Software implementiert ist (Schicht 7 oder 2), auf eine andere Hardware-Plattform in erheblicher Weise.

Durch die vorteilhafte Aufteilung der Funktionen zwischen Hardware und Software, d.h. zwischen dem Hardware-Zeitstempelmodul und dem IEEE 1588-Programmmodul lassen sich mit verhältnismäßig geringem Zusatzaufwand sehr hohe Synchronisationsgenauigkeiten erzielen.

Die Synchronisationsgenauigkeit kann noch weiter erhöht werden, wenn der Schnittstellenbaustein PHY anstatt mit einem separaten Taktgenerator mit demselben Taktsignal "local clock" wie das Hardware-Zeitstempelmodul getaktet wird. Auf diese Weise kann eine inhärente Synchronität zwischen dem Schnittstellenbaustein PHY und dem Hardware-Zeitstempelmodul hergestellt werden.

Erfindungsgemäße Synchronisiermodule lassen sich sowohl allein stehend als ASIC (Application Specific Integrated Circuit), FPGA (Field Programmable Gate Array) oder CPLD (Complex Programmable Logic Device), als auch eingebettet als Bestandteil von Bausteinen der Bitübertragungsschicht (bei Nutzung des Register-I/F, z.B. MDI) oder als Bestandteil von Netzwerk-Prozessoren einsetzen.

## Patentansprüche

1. Synchronisiermodul gemäß IEEE-1588-Standard zum Setzen eines Zeitstempels in zu sendende Synchronisiermeldungen gemäß dem PTP-Protokoll (PTP: Precision Time Protocol) des IEEE-1588-Standards, mit
einem Programmmodul zum Generieren einer zu sendenden Synchronisiermeldung und zum Setzen eines ersten Zeitstempels in die Synchronisiermeldung gemäß PTP-Protokoll,
**gekennzeichnet durch**
ein hardwareimplementiertes Zeitstempelmodul zur Übernahme von Synchronisiermeldungen vom Programmmodul und zum Senden von Synchronisiermeldungen gemäß PTP-Protokoll, mit
- einer Echtzeituhr (RTC),
- einem Meldungsdetektor (MD) zum Erkennen einer Synchronisiermeldung **durch** deren Unterscheidung von anderen Meldungen,
- einem Meldungs-Zeitstempelpunkt-Speicher (MTP) zum Speichern eines zweiten, von der Echtzeituhr (RTC) aktuell abgerufenen Zeitstempels zu einer Synchronisiermeldung, wobei das Speichern des zweiten Zeitstempels zu dem Zeitpunkt erfolgt, an dem der Meldungs-Zeitstempelpunkt-Speicher (MTP) ein entsprechendes Auslösesignal von einem Baustein (PHY) einer physikalischen Schnittstelle empfängt, das dieser Baustein (PHY) beim Erkennen der Präambel einer Synchronisiermeldung generiert, und
- einem Meldungsmanipulator (MM) zum Überschreiben des ersten Zeitstempels in einer **durch** den Meldungsdetektor (MD) erkannten Synchronisiermeldung **durch** den zweiten Zeitstempel.

2. Synchronisiermodul nach Anspruch 1,
**dadurch gekennzeichnet,**
**dass** der Meldungsmanipulator (MM) eingerichtet ist zum Ermitteln einer aktuellen Prüfsumme für die mit dem zweiten Zeitstempel versehene Synchronisiermeldung und zum Überschreiben einer vom Programmmodul in die Synchronisiermeldung eingefügten Prüfsumme durch die neue Prüfsumme.

3. Synchronisiermodul nach einem der vorhergehenden Ansprüche,
**dadurch gekennzeichnet,**
**dass** der Meldungsdetektor (MD) und der Meldungsmanipulator (MM) direkt an die Echtzeituhr (RTC) gekoppelt sind.

4. Synchronisiermodul nach einem der vorhergehenden Ansprüche,
**gekennzeichnet durch**
einen mit dem Meldungsdetektor gekoppelten Zwischenspeicher (FIFO) zum Zwischenspeichern einer einer **durch** den Meldungsdetektor erkannten Synchronisiermeldung entnommenen Synchronisierinformation sowie, dieser zugeordnet, dem aktuell abgerufenen Zeitstempel.

5. Synchronisiermodul nach einem der vorhergehenden Ansprüche,
**dadurch gekennzeichnet,**
**dass** der Meldungsmanipulator (MM) eingerichtet ist zum Eintragen eines von der Echtzeituhr (RTC) aktuell abgerufenen Empfangszeitstempels in ein gegenüber dem IEEE 1588-2002-Standard zusätzliches Feld einer empfangenen Synchronisiermeldung.

## Claims

1. Synchronisation module according to the IEEE 1588 standard for providing synchronisation messages requiring to be sent with a timestamp according to the PTP protocol (PTP: Precision Time Protocol) of the IEEE 1588 standard, having a program module for generating a synchronisation message requiring to be sent and for providing the synchronisation message with a first timestamp according to the PTP protocol
**characterised by**
a timestamp module implemented by hardware means for accepting synchronisation messages from the program module and for sending synchronisation messages according to the PTP protocol, having
- a realtime clock (RTC),
- a message detector (MD) for recognising a synchronisation message from its difference from other messages,
- a message timestamp point store (MTP) for storing a second time stamp currently called up from the realtime clock (RTC) for a synchronisation message, with the second timestamp being stored at the instant at which the message timestamp point store (MTP) receives a corresponding trigger signal from a module (PHY) of a physical interface, which generates this module (PHY) when the preamble of a synchronisation message is recognised, and
- a message manipulator (MM) for overwriting the first timestamp in a synchronisation message recognised by the message detector (MD) with the second timestamp.

2. Synchronisation module according to claim 1
**characterised in that**
the message manipulator (MM) has been set up for determining a current checksum for the synchronisation message provided with the second timestamp and for overwriting a checksum inserted into the synchronisation message by the program module with the new checksum.

3. Synchronisation module according to one of the preceding claims
**characterised in that**
the message detector (MD) and message manipulator (MM) are coupled directly to the realtime clock (RTC).

4. Synchronisation module according to one of the preceding claims
**characterised by**
a buffer (FIFO), coupled to the message detector, for buffering synchronising information taken from a synchronisation message recognised by the message detector and, assigned to said information, the currently called-up timestamp.

5. Synchronisation module according to one of the preceding claims
**characterised in that**
the message manipulator (MM) has been set up for entering a receive timestamp currently called up from the realtime clock (RTC) into a - compared to the IEEE 1588 2002 standard - additional field of a received synchronisation message.

## Revendications

1. Module de synchronisation selon le standard IEEE-1588 pour appliquer un horodatage dans des messages de synchronisation à émettre selon le protocole PTP (PTP: Precision Time Protocol) du standard IEEE-1588 , avec un module de programme pour générer un message de synchronisation à émettre et pour appliquer un premier horodatage dans le message de synchronisation selon le protocole PTP, **caractérisé par** un module d'horodatage implémenté dans le matériel pour prendre en compte des messages de synchronisation du module de programme et pour émettre des messages de synchronisation selon le protocole PTP, avec
- une horloge en temps réel (RTC),
- un détecteur de messages (MD) pour identifier un message de synchronisation en le distinguant d'autres messages,
- une mémoire de points d'horodatage de messages (MTP) pour stocker un deuxième horodatage pour un message de synchronisation, actuellement appelée par l'horloge en temps réel (RTC), le stockage de le deuxième horodatage étant effectué à l'instant auquel la mémoire de points d'horodatage de messages (MTP) reçoit d'un composant (PHY) d'une interface physique un signal de déclenchement correspondant que ledit composant (PHY) génère à l'identification du préambule d'un message de synchronisation et
- un manipulateur de messages (MM) pour remplacer le premier horodatage par le deuxième horodatage dans un message de synchronisation identifié par le détecteur de messages (MD).

2. Module de synchronisation selon la revendication 1, **caractérisé en ce que** le manipulateur de messages (MM) est aménagé pour déterminer un total de contrôle actuelle pour le message de synchronisation pourvu du deuxième horodatage et pour remplacer par la nouvelle somme de contrôle une somme de contrôle insérée dans le message de synchronisation par le module de programme.

3. Module de synchronisation selon l'une des revendications précédentes, **caractérisé en ce que** le détecteur de messages (MD) et le manipulateur de messages (MM) sont directement couplés à l'horloge en temps réel (RTC).

4. Module de synchronisation selon l'une des revendications précédentes, **caractérisé par** une mémoire intermédiaire (FIFO) couplée au détecteur de messages pour le stockage intermédiaire d'une information de synchronisation tirée d'un message de synchronisation identifié par le détecteur de messages ainsi que de l'horodatage actuellement appelé qui lui est affecté.

5. Module de synchronisation selon l'une des revendications précédentes, **caractérisé en ce que** le manipulateur de messages (MM) est aménagé pour introduire un horodatage de réception actuellement appelée par l'horloge en temps réel (RTC) dans un champ, additionnel en comparaison avec le standard IEEE 1588-2002, d'un message de synchronisation reçu.
